# EUROPÄISCHE PATENTSCHRIFT

(11) **EP 2 664 059 B1**
(45) Veröffentlichungstag und Bekanntmachung des Hinweises auf die Patenterteilung: **01.03.2017**
(21) Anmeldenummer: 11763714.0
(22) Anmeldetag: 30.09.2011
(51) Int. Cl.: H02P 29/00

(54) **VERFAHREN UND VORRICHTUNG ZUM BETRIEB EINER FREMDERREGTEN ELEKTRISCHEN MASCHINE**
METHOD AND DEVICE FOR OPERATING AN EXTERNALLY EXCITED ELECTRIC MACHINE
PROCÉDÉ ET DISPOSITIF POUR FAIRE FONCTIONNER UNE MACHINE ÉLECTRIQUE À EXCITATION SÉPARÉE

(30) Priorität: 02.12.2010 DE 102010062338
(43) Veröffentlichungstag der Anmeldung: 20.11.2013
(73) Patentinhaber: Robert Bosch GmbH, 70442 Stuttgart (DE)
(72) Erfinder: KOLMORGEN, Stefan, 75233 Tiefenbronn (DE); MIKULEC, Dragan, A-1030 Wien (AT); GOETTING, Gunther, 70499 Stuttgart (DE); SPANNHAKE, Stefan, 71706 Markgroeningen (DE); RAICHLE, Daniel, 71735 Eberdingen-Nussdorf (DE); SCHEIDLE, Alexander, 76139 Karlsruhe (DE); CHALLAND, Yves, 68165 Mannheim (DE); BEYER, Mario, 71706 Markgroeningen (DE); HERRANZ GRACIA, Mercedes, 97941 Tauberbischofsheim (DE)
(86) Internationale Anmeldenummer: PCT/EP2011/067106
(87) Internationale Veröffentlichungsnummer: WO 2012/072314

(56) Entgegenhaltungen:
- DE-A1- 19 849 889
- DE-A1-102007 053 755
- DE-A1-102009 012 942
- US-A- 5 321 308
- US-A1- 2010 156 338

## Beschreibung

Die Erfindung betrifft ein Verfahren und eine Vorrichtung zum Betrieb einer fremderregten elektrischen Maschine, insbesondere einer Synchronmaschine.

### Stand der Technik

Die Bemessungs- oder Nennleistung einer elektrischen Maschine wird gemäß nationaler und regionaler Normen in Abhängigkeit von der Betriebsart angegeben. Um dauerhafte Beschädigungen von Komponenten der elektrischen Maschine zu vermeiden, werden die elektrischen Maschinen derart ausgelegt, dass die angegebene Bemessungsleistung nicht überschritten wird bzw. die Leistung mit Hilfe einer geeigneten Überwachung von Spannungen und/oder Strömen und/oder Temperaturen ggf. begrenzt wird. Diese dem Komponentenschutz dienende Leistungsbegrenzung wird häufig auch als "Derating" bezeichnet.

Bei verschiedenen Anwendungen einer elektrischen Maschine, wie z.B. im Fahrzeugbereich, sind besondere Anforderungen und Randbedingungen zu berücksichtigen, welche zu der Zielsetzung führen, die elektrische Maschine mit einer möglichst hohen Leistungsdichte bei geringer Baugröße auszulegen.

Es ist auch bekannt, elektrische Maschinen als Antriebsaggregat in Fahrzeugen einzusetzen. Bei der Anwendung einer elektrischen Maschine als Antriebsaggregat in einem Elektro- oder Hybridfahrzeug ist bei der Auslegung der elektrischen Maschine auch darauf zu achten, dass die Fahrbereitschaft des Fahrzeugs stets sichergestellt ist und immer eine dem Fahrerwunsch entsprechende Leistung oder ein dem Fahrerwunsch entsprechendes Drehmoment zur Verfügung gestellt werden kann. Insbesondere bei einer derartigen Anwendung muss es daher Ziel der Auslegung und des Betriebsstrategie der elektrischen Maschine sein, eine automatische Leistungsreduzierung aus Gründen des Komponentenschutzes möglichst selten wirksam werden zu lassen.

US 2010/0156338 A1 offenbart ein System und ein Verfahren zur Überwachung der Statortemperatur in einem Wechselstrommotor. Solange der Motor sich im Stillstand befindet, wird die Temperatur der Statorwindungen überwacht und der Stator gegebenenfalls durch eine Gleichspannung erwärmt.

DE 10 2009 012 942 A1 betrifft ein Gebläse mit einem Elektromotor. Dabei ist in wenigstens einer Phase der Motorwicklung ein Wicklungstemperatursensor vorgesehen. Basierend auf den Temperaturwerten dieses Wicklungstemperatursensors kann auf eine Fehlfunktion des Elektromotors geschlossen werden.

US 5 321 308 A betrifft die Ansteuerung eines Turbinengenerators. Ein Rotortemperatur-Begrenzermodul verringert dabei das elektrische Feld im Rotor des Generators, wenn die Temperatur im Rotor zu groß wird.

DE 10 2007 053 775 A1 betrifft die Überwachung einer Läufertemperatur einer permanenterregten elektrischen Maschine. Die elektrische Beschaltung der Läuferwicklungen wird dabei in Abhängigkeit von einer erfassten Läufertemperatur verändert. Ein in dem Ständer der elektrischen Maschine fließender Ständerstrom wird ferner in Abhängigkeit von der elektrischen Beschaltung der Läuferwicklung verändert.

Für den Antrieb in Hybrid- oder Elektrofahrzeugen werden in der Regel elektrische Maschinen in Form von Drehfeldmaschinen, insbesondere Drehfeldsynchronmaschinen eingesetzt, welche in Verbindung mit Pulswechselrichtern - häufig auch als Inverter bezeichnet - betrieben werden. Die elektrischen Maschinen werden dabei wahlweise im Motor- oder Generatorbetrieb betrieben. Im Motorbetrieb erzeugt die elektrische Maschine ein Antriebsmoment, welches beim Einsatz in einem Hybridfahrzeug einen Verbrennungsmotor, zum Beispiel in einer Beschleunigungsphase, unterstützt. Im Generatorbetrieb erzeugt die elektrische Maschine elektrische Energie, die in einem Energiespeicher, wie zum Beispiel einer Traktionsbatterie, gespeichert wird.

Abhängig von einem Fahrerwunsch und ggf. weiteren Betriebsparametern des Fahrzeugs wird ein Arbeitspunkt der elektrischen Maschine festgelegt, welcher durch das Drehmoment und die Drehzahl der elektrischen Maschine definiert wird. Bei fremderregten elektrischen Maschinen kann der Arbeitspunkt über eine entsprechende Vorgabe des Erregerstromes und der Stator- oder Strangströme eingestellt werden. Es ist bekannt und üblich, eine fremderregte elektrische Maschine in einem vorgegebenen Arbeitspunkt wirkungsgradoptimal zu regeln, das heißt den Erregerstrom und die Statorströme derart festzulegen, dass der gewünschte Arbeistpunkt bei optimalem Wirkungsgrad erreicht wird. So ist beispielsweise aus der DE 198 49 889 A1 ein Verfahren zur leistungs- und wirkungsgradoptimierten Regelung einer elektrischen Maschine bekannt, bei dem wenigstens drei Regelbereiche gebildet werden, in denen die Regelung eines Erregerstromes und von Strangströmen der elektrischen Maschine nach unterschiedlichen Kriterien erfolgt, wobei der Erregerstrom und die Statorströme für jede Drehzahl und jede gewünschte Leistung nach Betrag und Phase frei auswählbar sind.

### Offenbarung der Erfindung

Die vorliegende Erfindung schafft ein Verfahren eine Vorrichtung zum Betrieb einer fremderregten elektrischen Maschine mit den Merkmalen der unabhängigen Patentansprüchen.

### Vorteile der Erfindung

Bei elektrischen Maschinen kann häufig nur der Stator, in Ausnahmefällen auch nur der Rotor, mit Hilfe eines entsprechenden Kühlsystem, wie z.B. einer Wasserkühlung, gekühlt werden. Die andere Komponente, also in der Regel der Rotor, bleibt dagegen ungekühlt. Die ungekühlte Komponente ist damit aber besonders anfällig für eine Überhitzung und stellt häufig den Auslöser für eine dem Komponentenschutz dienende Leistungsreduzierung dar. Eine fremderregte elektrische Maschine bietet die Möglichkeit, einen vorgegebenen Arbeitspunkt der elektrischen Maschine über mehrere Kombinationen von Erregerstrom und zugehörigen Statorströmen einzustellen, wobei die Stromhöhen die Wärmeentwicklung in den jeweiligen Komponenten wesentlich beeinflussen. Die Erfindung basiert auf der Grundidee, die Stromverteilung zwischen dem Rotor (Erregerstrom) und dem Stator (Statorströme) gegebebenenfalls derart zu verschieben, dass für einen gegebenen Arbeitspunkt die Verluste im Rotor bzw. Stator minimiert und somit die Wärmeentwicklung und die Temperatur in der entsprechenden Komponente begrenzt werden. Ob eine geänderte Stromverteilung erforderlich und/oder sinnvoll ist, wird dabei anhand einer die Rotortemperatur und/oder die Statortemperatur charakterisierenden Größe sowie gegebenefalls weiterer Betriebsgrößen des Fahrzeuges festgelegt. Die Erfindung bietet somit die Möglichkeit, einen sinnvollen Kompromiss zwischen wirkungsgradoptimalem und verfügbarkeitsoptimalem Betrieb der elektrischen Maschine zu finden.

Durch die Erfindung kann die Temperatur im Rotor bzw. im Stator bereits zu einem Zeitpunkt aktiv beeinflusst werden, zu dem noch keine Leistungsreduzierung zum Komponentenschutz erforderlich ist. Insbesondere kann eine zu erwartende Überhitzung der ungekühlten Komponente frühzeitig erkannt und entsprechend gegengesteuert werden. In vielen Betriebsfällen kann auf diese Weise eine Leistungsreduzierung aus Gründen des Komponentenschutzes gänzlich vermieden werden. Die durch die geänderte Stromverteilung zusätzlich entstehende Verlustleistung in der gekühlten Komponente kann durch das dafür vorgesehene Kühlsystem aufgenommen werden.

Gemäß einer Ausführungsform der Erfindung werden in Abhängigkeit von der die Rotortemperatur und/oder die Statortemperatur charakterisierenden Größe mindestens drei Betriebsbereiche gebildet.

Um die elektrische Maschine in einem möglichsten weiten Betriebsbereich wirkungsgradoptimal und damit möglichst effizient zu betreiben, werden in einem ersten Betriebsbereich, in welchem die Rotortemperatur und/oder die Statortemperatur unterhalb eines vorgebbaren ersten Grenzwertes liegt, der Erregerstrom und die Statorströme für einen vorgegebenen Arbeistpunkt der elektrischen Maschine, welcher durch ein Drehmoment und eine Drehzahl der elektrischen Maschine definiert ist, unabhängig von der die Rotortemperatur und/oder die Statortemperatur charakterisierenden Größe wirkungsgradoptimiert festgelegt. Der erste Grenzwert charakterisiert damit eine Rotor- bzw. Statortemperatur, bis zu welcher kein Eingriff in die Stromverteilung zwischen Rotor und Stator erforderlich ist, da keine Überhitzung zu erwarten ist.

In einem zweiten Betriebsbereich, in welchem die Rotortemperatur und/oder die Statortemperatur oberhalb des ersten Grenzwertes, aber unterhalb eines vorgebbaren zweiten Gremzwertes liegen, greift die erfindungsgemäße Stromverteilung und der Erregerstrom und die Statorströme werden in Abhängigkeit von der die Rotortemperatur und/oder die Statortemperatur charakterisierenden Größe festgelegt. Dabei wird jedoch im Gegensatz zum "klassischen" Komponentenschutz die maximal zulässige Leistung der elektrischen Maschine nicht reduziert. Zwar wird die elektrische Maschine in diesem Betriebsbereich nicht mehr wirkungsgradoptimal betrieben, dafür wird aber eine höhere Leistungsbereitschaft, das heißt eine längere Verfügbarkeit einer angeforderten Leistung bzw. eines angeforderten Drehmomentes, erreicht.

Um den Komponentenschutz gegegebenfalls dennoch zu gewährleisten, wir in einem dritten Betriebsbereich, in welchem die Rotortemperatur und/oder die Statortemperatur oberhalb des zweiten Grenzwertes liegt, die maximal zulässige Leistung der elektrischen Maschine reduziert.

Dabei können der Erregerstrom und die Statorströme in dem dritten Betriebsbereich unabhängig von der die Rotortemperatur und/oder die Statortemperatur charakterisierenden Größe wirkungsgradoptimiert festgelegt werden. Alternativ ist es aber auch denkbar, dass der Erregerstrom und die Statorströme auch in dem dritten Betriebsbereich in Abhängigkeit von der die Rotortemperatur und/oder die Statortemperatur charakterisierenden Größe festgelegt werden. Durch die auf diese Weise realisierbare gezielte Beeinflussung der weiteren Erwärmung des Rotors bzw. des Stators kann die erforderliche Reduzierung der maximal zulässigen Leistung geringer bemessen werden.

Dient die elektrische Maschine als Antriebsaggregat für ein Fahrzeug, so können der Erregerstrom und die Statorströme für die elektrische Maschine in den vorgebbaren Betriebsbereichen in Abhängigkeit von weiteren Betriebsparameteren des Fahrzeuges festgelegt werden. Ebenso können in diesem Fall der erste und/oder zweite Grenzwert in Abhängigkeit von weiteren Betriebsparameteren des Fahrzeuges festgelegt werden.

Dies bietet die Möglichkeit, die Aufteilung der Ströme auf den Rotor (Erregerstrom) und den Stator (Statorströme) optimal an konkrete Betriebsbedingungen anzupassen. So können z.B. Informationen aus einem Navigationssystem über die noch zu befahrende Strecke bis zum Zielort berücksichtigt werden. Ist z.B. eine längere Autobahnfahrt zu erwarten, so kann einerseits der erste Grenzwert abgesenkt werden, um ein möglichst frühzeitige aktive Beeinflussung der Rotor- bzw. Statortemperatur sicher zu stellen. Andereseits kann der Erregerstrom in dem zweiten Betriebsbereich deutlicher abgesenkt werden als z.B. bei Überlandfahrten, um trotz der zu erwartenden hohen Leistungsanforderungen eine Überhitzung sicher zu vermeiden.

Weitere Merkmale und Vorteile von Ausführungsformen der Erfindung ergeben sich aus der nachfolgenden Beschreibung mit Bezug auf die beigefügte Zeichnung, welche ein schematisches Blockschaltbild einer erfindungsgemäßen Vorrichtung zeigt.

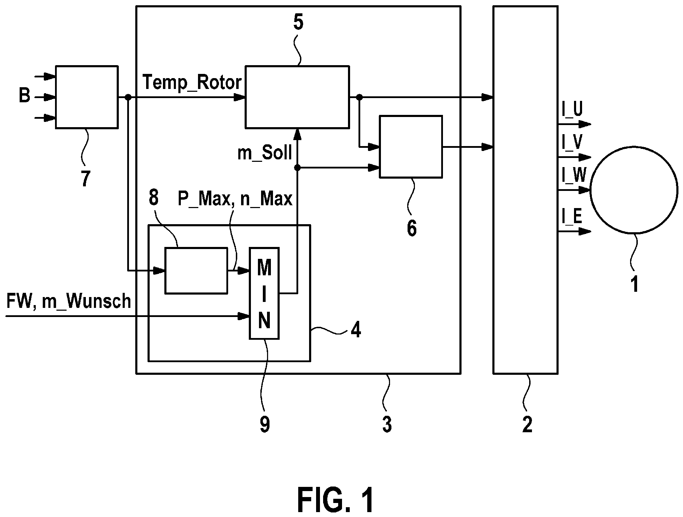

Figur 1 zeigt schematisch ein Blockschaltbild einer erfindungsgemäßen Vorrichtung zum Betrieb einer fremderregten elektrischen Maschine 1 in Form einer Drehstrommaschine, vorzugsweise einer Drehstrom-Synchronmaschine, welche als Antriebsaggregrat eines ansonsten nicht dargestellten Elektrofahrzeuges dient. Dabei sei beispielhaft davon ausgegangen, dass nur der Stator der elektrischen Maschine 1 durch ein zugehöriges Kühlsystem, z.B. eine Wasserkühlung, gekühlt ist. Der Rotor hingegen ist ungekühlt und stellt damit die hinsichtlich einer möglichen Überhitzung kritischere Komponente der elektrischen Maschine 1 dar. Leistung und Betriebsart der elektrischen Maschine 1 werden durch eine Ansteuerschaltung 2 bestimmt. Die Ansteuerschaltung 2 umfasst dabei sowohl Komponenten zur Regelung von Statorströmen I_U, I_V und I_W, wie z.B. einen Pulswechselrichter, als auch Komponenten zur Regelung eines Erregerstroms I_E der elektrischen Maschine 1. Die einzuregelnden Statorströme I_U, I_V und I_W sowie der einzuregelnde Erregerstrom I_E werden der Ansteuerschaltung 2 durch eine Steuereinheit 3 vorgegegeben. Die Steuereinheit 3 umfasst eine Leistungsvorgabe 4, eine Erregerstromermittlung 5 und eine Statorstromermittlung 6. Basierend auf einem von der Leistungsvorgabe 4 vorgegebenen Soll-Drehmoment m_Soll wird durch die Erregerstromermittlung 5 ein Erregerstrom I_E ermittelt. Ausgehend von diesem Erregerstrom I_E werden dann in der Statorstromermittlung 6 die zur Einstellung eines vorgebenen Arbeitspunktes der elektrischen Maschine 1 erforderlichen Statorströme I_U, I_V und I_W ermittelt. Der Arbeitspunkt der elektrischen Maschine 1 wird dabei durch ein Drehmoment und eine Drehzahl der elektrischen Maschine 1 definiert und in an sich bekannter Weise in Abhängigkeit von einem Fahrerwunsch FW, also einem vom Fahrer angeforderten Wunsch-Drehmoment m_Wunsch, und ggf. weiteren Betriebsparemetern des Fahrzeuges festgelegt.

Sowohl die Leistungsvorgabe 4 als auch die Erregerstromermittlung 5 sind mit einer Sensorik 7 verbunden, welche eine die Rotortemperatur Temp_Rotor charakterisierende Größe, insbesondere die Rotortemperatur Temp_Rotor selbst, erfasst. Die unmittelbare Erfassung der Rotortemperatur Temp_Rotor ist aufgrund der Rotorbewegung technisch aufwendig. Daher kann die Rortortemperatur Temp_Rotor alternativ zu einer direkten Temperaturmessung im Rotor auch mit Hilfe an sich bekannter Varfahren aus einfacher erfassbaren elektrischen Betriebsgrössen B der elektrischen Maschine 1 bestimmt werden. Die Erregerstromermittlung 4 vergleicht die Rotortemperatur Temp_Rotor mit einem vorgebbaren ersten Grenzwert. Solange die Rotortemperatur Temp_Rotor unterhalb des ersten Grenzwertes liegt (erster Betriebsbereich), wird der Erregerstrom I_E für den vorgegebenen Arbeitspunkt der elektrischen Maschine 1 unabhängig von der Rotortemperatur Temp_Rotor in an sich bekannter Weise, z.B. mit Hilfe eines Kennfeldes, wirkungsgradoptimiert festgelegt.

Übersteigt die Rotortemperatur Temp_Rotor den ersten Grenzwert (zweiter Betriebsbereich), so werden der Erregerstrom I_E und die Statorströme I_U, I_V und I_W in Abhängigkeit von der Rotortemperatur bzw. der sie charakterisierenden Größe festgelegt. Konkret wird die Stromverteilung zwischen dem Rotor und dem Stator derart verschoben, dass der Strom im Rotor (Erregerstrom) zu Lasten der Statorströme verringert wird. Auf diese Weise werden die Verluste und damit die Wärmeentwicklung im Rotor verringert. Somit kann eine die Rotortemperatur Temp_Rotor gezielt beeinflusst werden, insbesondere kann eine weitere Erhöhung der Rotortemperatur Temp_Rotor vermieden werden, ohne dass dazu eine maximal zulässige Leistung P_Max der elektrischen Maschine 1 reduziert werden muss. Da die Leistung der elektrischen Maschine 1 nicht verringert wird, führt eine Verringerung des Erregerstromes I_E zwangsweise zu einer Erhöhung der Statorströme I_U, I_V und I_W. Die dadurch im Stator entstehende zusätzliche Verlustleistung kann aber über das Kühlsystem des Stators aufgenommen werden.

Um eine dauerhafte Beschädigung von Komponenten der elektrischen Maschine 1 sicher zu vermeiden, ist ein "Komponentenschutz" vorgesehen. Dabei ermittelt die Leistungsvorgabe 4 in einem Block 8 in Abhängigkeit von der Rotortemperatur Temp_Rotor die maximal zulässige Leistung P_Max bzw. ein maximal zulässiges Drehmoment m_Max. Dazu wird die Rotortemperatur Temp_Rotor mit einem zweiten Grenzwert verglichen, welcher über dem ersten Grenzwert liegt. Bei Überschreiten des zweiten Grenzwertes (dritter Betriebsbereich) wird die maximal zulässige Leistung P_Max der elektrischen Maschine 1 reduziert, um eine dauerhafte Beschädigung von Komponenten der elektrischen Maschine 1 zu vermeiden. Die maximal zulässige Leistung P_Max bzw. das maximal zulässige Drehmoment m_Max werden in einem Block 9 mit dem Fahrerwunsch, also dem vom Fahrer angeforderten Wunsch-Drehmoment m_Wunsch verglichen, wobei der jeweils kleinere Wert an die Erregerstromermittlung 5 weitergegeben wird. In dem dritten Betriebsbereich können der Erregerstrom I_E und die Statorströme I_U, I_V und I_W unabhängig von der die Rotortemperatur charakterisierenden Größe wirkungsgradoptimiert festgelegt werden. Alternativ ist es aber auch möglich, den Erregerstrom I_E und die Statorströme I_U, I_V und I_W auch in dem dritten Betriebsbereich in Abhängigkeit von der die Rotortemperatur charakterisierenden Größe fetzulegen.

Diese Reduzierung der maximal zulässigen Leistung in dem dritten Betriebbereich führt dazu, dass der Arbeitspunkt der elektrischen Maschine 1 ggf., das heißt falls das vom Fahrer angeforderte Wunsch-Drehmoment die maximal zusässige Leistung P_Max bzw. das maximal zulässige Drehmoment m_Max übersteigt, verschoben wird. Die Erfindung bewirkt, dass dieser dritte Betriebbereich, in welchem die maximal zulässige Leistung P_Max der elektrischen Maschine 1 reduziert wird, deutlich seltener wirksam wird als bei den aus dem Stand der Technik bekannten Verfahren und Vorrichtungen.

Dieser Effekt kann noch verstärkt werden, wenn der Erregerstrom I_E und die Statorströme I_U, I_V und I_W für die elektrische Maschine 1 und/oder die Grenzwerte im zweiten und ggf. auch im dritten Betriebsbereich in Abhängigkeit von weiteren Betriebsparameteren des Fahrzeuges festgelegt werden. Auf diese Weise kann der Zeitpunkt und das Ausmaß der Stromverschiebung zwischen Stator und Rotor optimal an die jeweilige Betriebssituation des Fahrzeuges angepasst werden.

Die Erfindung wurde anhand einer elektrischen Maschine mit gekühltem Stator und ungekühltem Rotor erläutert, ist aber analog auch auf elektrische Maschinen mit gekühltem Rotor und ungekühltem Stator anwendbar. Ebenso ist die Anwendung der Erfindung nicht auf Drehstrommaschinen beschränkt, sondern kann auch für elektrische Maschinen mit mehr oder weniger Phasen eingesetzt werden. Selbstverständlich ist die Erfindung auch auf elektrische Maschinen außerhalb des Automobilbereichs anwendbar.

## Patentansprüche

1. Verfahren zum Betrieb einer fremderregten elektrischen Maschine (1), insbesondere Synchronmaschine, bei dem
- eine, eine Rotortemperatur (Temp_Rotor) und/oder eine Statortemperatur charakterisierende Größe bestimmt werden und
- ein Erregerstrom (I_E) und Statorströme (I_U, I_V, I_W) für die elektrische Maschine (1) zumindest in vorgebbaren Betriebsbereichen in Abhängigkeit von der die Rotortemperatur (Temp_Rotor) und/oder die Statortemperatur charakterisierenden Größe festgelegt werden,
- wobei in einem ersten Betriebsbereich, in welchem die Rotortemperatur (Temp_Rotor) und/oder die Statortemperatur unterhalb eines vorgebbaren ersten Grenzwertes liegt, der Erregerstrom (I_E) und die Statorströme (I_U, I_V, I_W) für einen vorgegebenen Arbeitspunkt der elektrischen Maschine (1), welcher durch ein Drehmoment und eine Drehzahl definiert ist, unabhängig von der Rotortemperatur (Temp_Rotor) und/oder der Statortemperatur wirkungsgradoptimiert festgelegt werden; und
- in einem zweiten Betriebsbereich, in welchem die Rotortemperatur (Temp_Rotor) und/oder die Statortemperatur oberhalb des ersten Grenzwertes, aber unterhalb eines vorgebbaren zweiten Grenzwertes liegen, der Erregerstrom (I_E) und die Statorströme (I_U, I_V, I_W) der elektrischen Maschine (1) in Abhängigkeit von der die Rotortemperatur (Temp_Rotor) und/oder die Statortemperatur charakterisierenden Größe festgelegt werden ohne dabei eine maximale zulässige Leistung (P_Max) der elektrischen Maschine (1) zu reduzieren.

2. Verfahren nach Anspruch 1, wobei in einem dritten Betriebsbereich, in welchem die Rotortemperatur (Temp_Rotor) und/oder die Statortemperatur oberhalb des zweiten Grenzwertes liegt, die maximal zulässige Leistung (P_Max) der elektrischen Maschine (1) reduziert wird.

3. Verfahren nach Anspruch 2, wobei der Erregerstrom (I_E) und die Statorströme (I_U, I_V, I_W) in dem dritten Betriebsbereich unabhängig von der die Rotortemperatur (Temp_Rotor) und/oder die Statortemperatur charakterisierenden Größe wirkungsgradoptimiert festgelegt werden.

4. Verfahren nach Anspruch 2, wobei der Erregerstrom (I_E) und die Statorströme (I_U, I_V, I_W) in dem dritten Betriebsbereich in Abhängigkeit von der die Rotortemperatur (Temp_Rotor) und/oder die Statortemperatur charakterisierenden Größe festgelegt werden.

5. Verfahren nach einem der vorhergehenden Ansprüche, wobei die elektrische Maschine (1) als Antriebsaggregat für ein Fahrzeug dient und der Erregerstrom (I_E) und die Statorströme (I_U, I_V, I_W) für die elektrische Maschine (1) in den vorgebbaren Betriebsbereichen in Abhängigkeit von Informationen aus einem Navigationssystem des Fahrzeuges über eine noch zu befahrendes Strecke festgelegt werden.

6. Verfahren nach einem der vorherigen Ansprüche, wobei die elektrische Maschine (1) als Antriebsaggregat für ein Fahrzeug dient und der erste und/oder zweite Grenzwert in Abhängigkeit von Informationen aus einem Navigationssystem des Fahrzeuges über eine noch zu befahrendes Strecke festgelegt werden.

7. Vorrichtung zum Betrieb einer fremderregten elektrischen Maschine (1), insbesondere Synchronmaschine, mit
- einer Sensorik (7) zum Erfassen mindestens einer, eine Rotortemperatur (Temp_Rotor) und/oder eine Statortemperatur charakterisierenden Größe, und
- einer Steuereinheit (3), welche einen Erregerstrom (I_E) und Statorströme (I_U, I_V, I_W) für die elektrische Maschine (1) zumindest in vorgebbaren Betriebsbereichen in Abhängigkeit von der die Rotortemperatur (Temp_Rotor) und/oder die Statortemperatur charakterisierenden Größe festlegt,
- wobei die Steuereinheit (3) dazu ausgelegt ist in einem ersten Betriebsbereich, in welchem die Rotortemperatur (Temp_Rotor) und/oder die Statortemperatur unterhalb eines vorgebbaren ersten Grenzwertes liegt, der Erregerstrom (I_E) und die Statorströme (I_U, I_V, I_W) für einen vorgegebenen Arbeitspunkt der elektrischen Maschine (1), welcher durch ein Drehmoment und eine Drehzahl definiert ist, unabhängig von der Rotortemperatur (Temp_Rotor) und/oder der Statortemperatur wirkungsgradoptimiert festzugelegen und in einem zweiten Betriebsbereich, in welchem die Rotortemperatur (Temp_Rotor) und/oder die Statortemperatur oberhalb des ersten Grenzwertes, aber unterhalb eines vorgebbaren zweiten Grenzwertes liegen, der Erregerstrom (I_E) und die Statorströme (I_U, I_V, I_W) der elektrischen Maschine (1) in Abhängigkeit von der die Rotortemperatur (Temp_Rotor) und/oder die Statortemperatur charakterisierenden Größe festzugelegen ohne dabei eine maximale zulässige Leistung (P_Max) der elektrischen Maschine (1) zu reduzieren.

## Claims

1. Method for operating an externally excited electric machine (1), in particular synchronous machine, in which method
- a variable which characterizes a rotor temperature (Temp_Rotor) and/or a stator temperature are determined, and
- an exciter current (I_E) and stator currents (I_U, I_V, I_W) for the electric machine (1) are specified, at least in predefinable operating ranges, as a function of the variable which characterizes the rotor temperature (Temp_Rotor) and/or the stator temperature,
- wherein in a first operating range in which the rotor temperature (Temp_Rotor) and/or the stator temperature are/is below a predefinable first limiting value, the exciter current (I_E) and the stator currents (I_U, I_V, I_W) are specified in a way which is optimized in terms of efficiency for a predefined working point of the electric machine (1), which is defined by a torque and a rotational speed, independently of the rotor temperature (Temp_Rotor) and/or the stator temperature; and
- in a second operating range in which the rotor temperature (Temp_Rotor) and/or the stator temperature are/is above the first limiting value but below a predefinable second limiting value, the exciter current (I_E) and the stator current (I_U, I_V, I_W) of the electric machine (1) are specified as a function of the variable which characterizes the rotor temperature (Temp_Rotor) and/or the stator temperature, without at the same time reducing a maximum permissible power (P_Max) of the electric machine (1).

2. Method according to Claim 1, wherein in a third operating range in which the rotor temperature (Temp_Rotor) and/or the stator temperature are/is above the second limiting value, the maximum permissible power (P_Max) of the electric machine (1) is reduced.

3. Method according to Claim 2, wherein the exciter current (I_E) and the stator currents (I_U, I_V, I_W) in the third operating range are specified in a way which is optimized in terms of efficiency, independently of the variable which characterizes the rotor temperature (Temp_Rotor) and/or the stator temperature.

4. Method according to Claim 2, wherein the exciter current (I_E) and the stator currents (I_U, I_V, I_W) in the third operating range are specified as a function of the variable which characterizes the rotor temperature (Temp_Rotor) and/or the stator temperature.

5. Method according to one of the preceding claims, wherein the electric machine (1) serves as a drive assembly for a vehicle, and the exciter current (I_E) and the stator currents (I_U, I_V, I_W) for the electric machine (1) in the predefinable operating ranges are defined as a function of information from a navigation system of the vehicle about a distance which is still to be travelled.

6. Method according to one of the preceding claims, wherein the electric machine (1) serves as a drive assembly for a vehicle, and the first and/or second limiting values are specified as a function of information from a navigation system of the vehicle about a distance which is still to be travelled.

7. Device for operating an externally excited electric machine (1), in particular synchronous machine, having
- a sensor system (7) for acquiring at least one variable which characterizes a rotor temperature (Temp_Rotor) and/or a stator temperature, and
- a control unit (3) which specifies an exciter current (I_E) and stator currents (I_U, I_V, I_W) for the electric machine (1) at least in predefinable operating ranges as a function of the variable which characterizes the rotor temperature (Temp_Rotor) and/or the stator temperature,
- wherein the control unit (3) is configured to specify in a way which is optimized in terms of efficiency, in a first operating range in which the rotor temperature (Temp_Rotor) and/or the stator temperature are/is below a predefinable first limiting value, the exciter current (I_E) and the stator currents (I_U, I_V, I_W) for a predefined working point of the electric machine (1) which is defined by a torque and a rotational speed, independently of the rotor temperature (Temp_Rotor) and/or the stator temperature, and to specify, in a second operating range in which the rotor temperature (Temp_Rotor) and/or the stator temperature are/is above the first limiting value but below a predefinable second limiting value, the exciter current (I_E) and the stator currents (I_U, I_V, I_W) of the electric machine (1) as a function of the variable which characterizes the rotor temperature (Temp_Rotor) and/or the stator temperature, without at the same time reducing a maximum permissible power (P_Max) of the electric machine (1).

## Revendications

1. Procédé destiné au fonctionnement d'une machine électrique (1) à excitation séparée, en particulier d'une machine synchrone, pour lequel :
- une grandeur caractérisant une température du rotor (Temp_Rotor) et/ou une température du stator doit être déterminée et
- un courant d'excitation (l_E) et des courants statoriques (l_U, l_V, l_W) sont fixés pour la machine électrique (1), tout au moins dans des plages de fonctionnement pouvant être prédéfinies, en fonction de la grandeur caractérisant la température du rotor (Temp_Rotor) et/ou la température du stator,
- où dans une première plage de fonctionnement, dans laquelle la température du rotor (Temp_Rotor) et/ou la température du stator se situent au-dessous d'une première valeur de seuil pouvant être prédéfinie, le courant d'excitation (l_E) et les courants statoriques (l_U, l_V, l_W) sont fixés pour un point de travail prédéfini de la machine électrique (1), de manière à être optimisés pour un haut rendement et indépendamment de la température du rotor (Temp_Rotor) et/ou de la température du stator, lequel point de travail est défini par un couple et par une vitesse de rotation ; et
- dans une deuxième plage de fonctionnement, dans laquelle la température du rotor (Temp_Rotor) et/ou la température du stator se situent au-dessus de la première valeur de seuil, mais au-dessous d'une deuxième valeur de seuil pouvant être prédéfinie, le courant d'excitation (l_E) et les courants statoriques (l_U, l_V, l_W) de la machine électrique (1) sont fixés en fonction de la grandeur caractérisant la température du rotor (Temp_Rotor) et/ou la température du stator, sans réduire pour autant une puissance maximale admissible (P_Max) de la machine électrique (1).

2. Procédé selon la revendication 1, où la puissance maximale admissible (P_Max) de la machine électrique (1) est réduite dans une troisième plage de fonctionnement, dans laquelle la température du rotor (Temp_Rotor) et/ou la température du stator se situent au-dessus de la deuxième valeur de seuil.

3. Procédé selon la revendication 2, où le courant d'excitation (l_E) et les courants statoriques (l_U, l_V, l_W) sont fixés dans la troisième plage de fonctionnement, de manière à être optimisés pour un haut rendement et indépendamment de la grandeur caractérisant la température du rotor (Temp_Rotor) et/ou la température du stator.

4. Procédé selon la revendication 2, où le courant d'excitation (l_E) et les courants statoriques (l_U, l_V, l_W) sont fixés dans la troisième plage de fonctionnement, en fonction de la grandeur caractérisant la température du rotor (Temp_Rotor) et/ou la température du stator.

5. Procédé selon l'une des revendications précédentes, où la machine électrique (1) sert de groupe moteur pour un véhicule et où le courant d'excitation (l_E) et les courants statoriques (l_U, l_V, l_W) pour la machine électrique (1) sont fixés dans les plages de fonctionnement pouvant être prédéfinies, en fonction des informations issues d'un système de navigation du véhicule sur un trajet restant à parcourir.

6. Procédé selon l'une des revendications précédentes, où la machine électrique (1) sert de groupe moteur pour un véhicule et la première et/ou la deuxième valeur de seuil sont fixées en fonction des informations issues d'un système de navigation du véhicule sur un trajet restant à parcourir.

7. Dispositif destiné au fonctionnement d'une machine électrique (1) à excitation séparée, en particulier d'une machine synchrone, avec
- un système de capteurs (7) destiné à la saisie d'au moins une grandeur caractérisant une température du rotor (Temp_Rotor) et/ou une température du stator, et
- une unité de commande (3), laquelle fixe un courant d'excitation (l_E) et des courants statoriques (l_U, l_V, l_W) pour la machine électrique (1), tout au moins dans des plages de fonctionnement pouvant être prédéfinies, en fonction de la grandeur caractérisant la température du rotor (Temp_Rotor) et/ou la température du stator,
- l'unité de commande (3) étant conçue pour :
déterminer, de manière à être optimisée pour un haut rendement, le courant d'excitation (l_E) et les courants statoriques (l_U, l_V, l_W) pour un point de travail prédéfini de la machine électrique (1), lequel est défini par un couple et par une vitesse de rotation, indépendamment de la température du rotor (Temp_Rotor) et/ou de la température du stator, dans une première plage de fonctionnement, dans laquelle la température du rotor (Temp_Rotor) et/ou la température du stator se situent au-dessous d'une première valeur de seuil pouvant être prédéfinie ; et pour fixer le courant d'excitation (l_E) et les courants statoriques (l_U, l_V, l_W) de la machine électrique (1) en fonction de la grandeur caractérisant la température du rotor (Temp_Rotor) et/ou la température du stator, sans réduire pour autant une puissance maximale admissible (P_Max) de la machine électrique (1), dans une deuxième plage de fonctionnement, dans laquelle la température du rotor (Temp_Rotor) et/ou la température du stator se situent au-dessus de la première valeur de seuil, mais au-dessous d'une deuxième valeur de seuil pouvant être prédéfinie.
